# EUROPEAN PATENT APPLICATION

(11) **EP 4 799 486 A1**
(43) Date of publication of application: **02.09.2026**
(21) Application number: 25160812.1
(22) Date of filing: 28.02.2025
(51) Int. Cl.: A23D 7/005, A23D 7/02, A23D 9/007, A23D 9/02

(54) **PROTEIN NANOFIBRIL-TEMPLATED OLEOGELS**

(71) Applicant: ETH Zurich, 8092 Zurich (CH)
(72) Inventor: MEZZENGA, Raffaele, 8604 Volketswil (CH); MYKOLENKO, Svitlana, 8049 Zürich (CH); USUELLI, Mattia, 8608 Bubikon (CH)

(57) **Abstract**

The present invention relates to an oleogel composed of protein nanofibrils and ≥95% oil, without the need for an emulsifier. The present invention also relates to a method for the production of this oleogel.

## Description

### Field

The present invention relates to an oleogel composed of protein nanofibrils (also known as amyloid fibrils) and ≥95% oil, without the need for an emulsifier. The present invention also relates to a method for the production of this oleogel.

### Background

Structuring liquid oils into fat-like solid materials by oleogelation is crucial for mimicking the techno-functional benefits of fats in food materials and to ensure good spreadability, firmness and stability. However, for targeting real food applications, oleogelators must be food-grade, economically affordable and capable to percolate through the liquid oil as a gel network at low concentrations, thus providing to the resulting oleogels the required solid-like structure and properties. High nutritional value and good sustainability footprint urge researchers to seek for new solutions in oleogelation, thus meeting the high consumer expectation of healthy and environmentally friendly foods.

The amphiphilic nature of proteins allows them to interact with hydrophobic compounds while remaining water-soluble and thus behave as ideal surfactants. Nevertheless, the versatile functionality of proteins is usually constrained when forming a protein network in a hydrophobic environment. The dispersibility of proteins in oil is limited due to their prevalent hydrophilicity. Romoscanu & Mezzenga (Romoscanu & Mezzenga, Langmuir, 22, 2006) proposed an emulsion-templated approach to incorporate proteins into hydrophobic environments. This approach provides the formation of a continuous, viscoelastic protein interfacial network embedding oil droplets. However, in that study, cross-linking of whey proteins was achieved either thermally by holding the concentrated emulsion at 80°C for 10 min or chemically with glutaraldehyde. Oil heating is usually a crucial step to form oleogels employing waxes, lecithin, monoglycerides or ethylcellulose, which promotes lipid degradation through thermally induced auto-oxidation. Another route leading to protein-based oleogelation is the transfer of protein building blocks from an aqueous to a hydrophobic environment by stepwise solvent exchange, which requires the use of acetone or tetrahydrofuran, which may significantly limit large-scale food applications.

Protein self-assembly into protein nanofibrils represents a new approach for enhancing protein techno-functionality by exposing different functional amino acid groups to the environment. In this way, the above-mentioned tendency of many proteins to prefer hydrophilic environments to hydrophobic ones is bypassed through unfolding, hydrolyzation and self-assembly, thus allowing the amino acids with hydrophobic nature (naturally folded in the interior of the native proteins) to be exposed on the surface and to effectively interact with the surrounding environment. Fibrillization of proteins by heat-induced acidic hydrolysis results in the formation of nanofibrils with a high aspect ratio, Young's modulus and stability. The paramount potential of using protein nanofibrils as food ingredients has been recently demonstrated by in-vitro and in-vivo studies, removing most of the previous health concerns about the nutritional use of food protein nanofibrils (Xu et al. (2023). Nature Communications, 14 (1)). The superior emulsification properties of protein nanofibrils are promoted by high interfacial modulus and high surface activity of the oil-water interfaces formed by protein nanofibrils. Moreover, protein nanofibrils facilitate emulsion stability through irreversible interfacial absorption and anti-aggregation properties, forming a dense absorption layer in emulsions stabilised by protein nanofibrils. Plant proteins, recognised as more sustainable food ingredients than animal counterparts, can also be fibrillized into protein nanofibrils by heat-induced acidic hydrolysis. For example, soy, fava bean and potato proteins have demonstrated high gelling capacity (Peng et al. (2016). Langmuir, 32(9), 2164-2174; Xu et al. (2023). Food Hydrocolloids, 145(1), 109146.).

Given their specific mesoscopic characteristics and surface activity, protein nanofibrils facilitate emulsification and promote the inhibition of transport and collision of droplets in the emulsions. However, the oleogelating capacity of protein nanofibrils has not yet been investigated to the best of our knowledge. This study introduces a three-stepwise approach to structure liquid oils by exploring the oleogelating capacity of protein nanofibrils (also known as amyloid fibrils) produced from both animal and plant proteins. First, whey (WAF), soy (SAF), and potato (PAF) protein nanofibrils are produced by heat-unfolding and pH hydrolysis, and their morphological characteristics are studied by AFM image statistical analysis. Then, oil-in-water Pickering emulsions stabilised by the protein nanofibrils are produced by ultrasonication of rapeseed oil (RSO) and medium-chain triglyceride oil (MCT) droplets and characterised by optical microscopy, particle size distribution and viscosity. Finally, oleogels are structured by water removal via centrifugation, and their structure is analysed by confocal laser scanning microscopy and cryo scanning electron microscopy. We demonstrate the oleogelation capacity of the protein nanofibrils by the oil encapsulation efficiency and the rheological behaviour of the oleogels in oscillatory sweeping tests. This study demonstrates for the first time the oleogelation capacity of protein nanofibrils as a generic feature of these protein self-assemblies and may open new possibilities in the applications of this strategy in food, pharma and cosmetic industry.

Based on the above-mentioned state of the art, the objective of the present invention is to provide means and methods to production of an oleogel with improved properties. This objective is attained by the subject-matter of the independent claims of the present specification, with further advantageous embodiments described in the dependent claims, examples, figures and general description of this specification.

### Summary of the Invention

A first aspect of the invention relates to an oleogel comprising
- a plurality of protein nanofibrils forming a network (in other words percolating in three dimensions), and
- ≥95% of a lipophilic phase (w/w), and
- ≤3% (w/w) emulsifier.

A second aspect of the invention relates to a method for production of an oleogel, the method comprising the following steps.
a. providing a protein nanofibril-comprising composition;
b. in an emulsifying step, exposing the protein nanofibril-comprising composition to
   i. high-intensity ultrasound; and/or
   ii. high pressure; and/or
   iii. microfluidization;
   in presence of an oil, yielding a Pickering emulsion;
c. in a water-removing step, exposing the Pickering emulsion to
   i. centrifugation; and/or
   ii. filtration, and/or
   iii. evaporation, and/or
   iv. freeze-drying;
   yielding an oleogel.

An alternative of the first aspect relates to an oleogel obtained by the method of the second aspect.

### Terms and definitions

### General

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising", "having", "containing", and "including", and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a", "or" and "the" include plural referents unless the context clearly dictates otherwise.

"And/or" where used herein is to be taken as specific recitation of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

Unless defined otherwise, all technical and scientific terms used herein have the same meaning as commonly understood by one of ordinary skill in the art. Standard techniques are used for chemical methods.

The term *oleogel* in the context of the present specification relates to an anhydrous, viscoelastic self-standing material. Anhydrous means having a water content of less than 2% (w/w) water. The viscoelastic property can be measured as the storage modulus (G') of not less than 140 kPa at 1 rad/s and loss modulus (G") of not less than 20 kPa at 1 rad/s. In other words, an oleogel is a solidified oil, the oleogel comprising a structuring component which allows for stabilization of the oil. Here, the structuring component is protein nanofibrils. The oleogel is solid at room temperature.

The term *protein nanofibrils* in the context of the present specification relates to a filamentous protein aggregate whose beta-strands run orthogonal to the main fibril axis and are spaced at ca 4Å periodicity. The term *protein nanofibrils* is generally known in the field and particularly describes fibrils made by proteins or peptides prevalently found in cross beta-sheet secondary structure. Accordingly, this term excludes natively-folded proteins and other types of non-amyloid protein aggregates. The term *protein nanofibrils* and *amyloid fibrils* are used synonymously herein.

The term *oil* in the context of the present specification relates to a substance that is in a viscous liquid state ("oily") and fluidic at ambient temperatures or slightly warmer, and is both hydrophobic (immiscible with water) and lipophilic (miscible with other oils, literally). This general definition includes compound classes with otherwise unrelated chemical structures, properties, and uses, including vegetable oils, petrochemical oils, and volatile essential oils. Oil is a nonpolar substance. The word "oil" is used for any substance that does not mix with water and has a greasy feel, such as petroleum (or crude oil) and heating oil, regardless of its chemical structure. Fluidic means that the oil will run from the top of a tube to the bottom of the tube if the tube is inverted ("reverse tube test"). In certain embodiments, the oil of the invention is an edible oil. Edible or cooking oil is fat of plant, animal or microbial origin, which is liquid at room temperature and is suitable for food use.

The term *lipophilic phase* in the context of the present specification relates to the part (or portion) of the oleogel, which is lipophilic. The term "phase" does not relate to phase separation or the like.

The term *emulsifier* in the context of the present specification relates to a substance that stabilizes an emulsion, in particular an additive used to stabilize processed foods. An emulsifier comprises a hydrophilic moiety and a hydrophobic moiety.

The term *ambient conditions* in the context of the present specification relates to room temperature, atmospheric pressure, and a relative humidity of 20-70%.

The term *protein* in the context of the present specification relates to a molecule consisting of 50 or more amino acids that form a linear chain wherein the amino acids are connected by peptide bonds. The amino acid sequence of a protein may represent the amino acid sequence of a whole (as found physiologically) protein or fragments thereof.

Any patent document cited herein shall be deemed incorporated by reference herein in its entirety.

### Detailed Description of the Invention

The invention provides protein-based oleogels structured by protein nanofibrils as the sole gelling agent, delivering high oil content (>97%) at low protein concentrations (<2.5%). This solvent- and nickel-free process avoids oil heating, prevents trans-fat formation, and preserves the nutritional integrity of liquid oil, particularly rich in polyunsaturated fatty acids. The oleogels exhibit superior structural stability and viscoelasticity due to the high aspect ratio and surface activity of protein nanofibrils, forming interfacial networks and tightly packing oil droplets, which prevent oil leakage and promote long-term storage stability.

This green, cost-efficient technology supports circular economy principles, allowing the incorporation of protein nanofibrils that may be obtained from industrial food side streams. Protein nanofibril-templated oleogels have versatile applications in food, pharmaceutical, and cosmetic industries as stable carriers for bioactive compounds, enhancing product stability, bioavailability, and controlled release without complex processing steps.

### The oleogel

A first aspect of the invention relates to an oleogel comprising
- a plurality of protein nanofibrils forming a network (in other words percolating in three dimensions), and
- ≥95% of a lipophilic phase (w/w), and
- ≤3% (w/w) emulsifier.

In certain embodiments, the oleogel comprises ≤1% (w/w) emulsifier. In certain embodiments, the oleogel comprises ≤0.5% (w/w) emulsifier. In certain embodiments, the oleogel comprises ≤0.1% (w/w) emulsifier. In certain embodiments, the oleogel comprises no emulsifier. Emulsifiers are expensive and pose restrictions on the formulation for food purposes, thus, it is advantageous to avoid their use.

In certain embodiments, the lipophilic phase consists of oil. In certain embodiments, the lipophilic phase comprises ≥60% oil. In certain embodiments, the lipophilic phase comprises ≥70% oil. In certain embodiments, the lipophilic phase comprises ≥80% oil. In certain embodiments, the lipophilic phase comprises ≥90% oil. In certain embodiments, the lipophilic phase comprises ≥95% oil. In certain embodiments, the lipophilic phase comprises ≥98% oil. In certain embodiments, the lipophilic phase comprises a lipophilic drug. In certain embodiments, the lipophilic phase comprises a compound selected from the group of α-linolenic acid (ω-3), astaxanthin, β-carotene, boswellic acids, β-sitosterol, cannabidiol (CBD), capsaicin, coenzyme Q10 (ubiquinone), curcumin, docosahexaenoic acid (DHA), eicosapentaenoic acid (EPA), γ-linolenic acid (GLA), linoleic acid (ω-6), lutein, lycopene, quercetin, resveratrol, squalene, tocotrienols, vitamin A (retinol), vitamin D₂ (ergocalciferol), vitamin D₃ (cholecalciferol), vitamin E (α-tocopherol), vitamin K₁ (phylloquinone), vitamin K₂ (menaquinones), zeaxanthin.

An alternative of the first aspect relates to an oleogel obtained by the method of the second aspect.

### The method for production

A second aspect of the invention relates to a method for production of an oleogel, the method comprising the following steps.

Step a: A protein nanofibril-comprising composition is provided in an aqueous solution. The protein nanofibrils may be produced via the method mentioned below.

Step b: the emulsifying step: In certain embodiments, the protein nanofibril-comprising composition is exposed to high intensity ultrasound (with a frequency in the range of 20-40 kHz with acoustic power density of 100 W/cm³ for 5 min) in presence of a fluidic oil, yielding a Pickering emulsion. In certain embodiments, the protein nanofibril-comprising composition is exposed to high pressure (50 to 200 MPa) in presence of a fluidic oil, yielding a Pickering emulsion. In certain embodiments, the protein nanofibril-comprising composition is exposed to microfluidization in presence of a fluidic oil, yielding a Pickering emulsion. Microfluidization uses fixed-geometry interaction chambers that split the fluid into two or more microstreams, which then collide at high velocities, operating a pressure from 34 to 207 MPa. In certain embodiments, the protein nanofibril-comprising composition is exposed to a combination of the steps mentioned before. To determine whether an oil is "fluidic", the reverse tube test is employed: If upon inverting a tube, the solution contained within remains on the bottom of the top; i.e. it does not flow, this indicates that it has become a gel and is not fluidic.

High pressure homogenization uses a valve assembly to restrict flow and force fluid through an opening and implies pressure ranging from 50 to 200 MPa.

Microfluidization uses fixed-geometry interaction chambers that split the fluid into two or more microstreams, which then collide at high velocities, operating a pressure from 34 to 207 MPa.

High pressure homogenization and microfluidization require preliminary rotor-stator homogenization. A rotor-stator homogenization employs a high-speed rotor rotating within a stationary stator to generate shear forces through mechanical and hydraulic action. As the mixture passes through the rotor-stator gap and stator apertures, immiscible phases (e.g., oil and water) are disrupted. This high-shear process reduces droplet sizes producing pre-emulsion.

Step c: the water-removing step: In certain embodiments, the Pickering emulsion is exposed to centrifugation. In certain embodiments, the Pickering emulsion is exposed to filtration. In certain embodiments, the Pickering emulsion is exposed to evaporation (e.g. above 20°C with ventilation for ≥ 2 h, or spray-dried). In certain embodiments, the Pickering emulsion is exposed to freeze-drying. In certain embodiments, the Pickering emulsion is exposed to a combination of the steps mentioned before. After the water-removing step, an oleogel is yielded. An oleogel is characterized by ≤1-3% (w/w) water.

In certain embodiments, the protein nanofibril-comprising composition is produced by a method comprising the steps:
a. exposing a protein-comprising composition to a pH below its isoelectric point (referring to the pH at which the protein carries no net electrical charge), yielding an acidic protein solution;
b. exposing the acidic protein solution to a temperature above the protein denaturation temperature (which leads to the disruption of bonds and unfolding of the protein, following hydrolysis of the unfolded protein and self-assembly), yielding a protein nanofibril-comprising composition.

In certain embodiments, an oil which is less fluidic (viscosity of 90 mPa·s at room temperature) is pre-heated before the emulsifying step, particularly pre-heated to 40 to 60°C.

### Components of the oleogel

In certain embodiments, the protein is an amyloidogenic plant- based protein. In certain embodiments, the protein is an amyloidogenic animal-based protein.

Various plant-based and animal-based protein sources, collectively amyloidogenic proteins, can self-assemble into protein nanofibrils at favourable conditions. Almost all proteins (>98.7%) contain at least one self-complementary short sequence capable of forming protein nanofibrils (Goldschmidt, L., Teng, P. K., Riek, R., & Eisenberg, D. (2010). Proceedings of the National Academy of Sciences, 107(8), 3487-3492).

In certain embodiments, the plant-based protein is patatin (e.g. obtained from potato sources). In certain embodiments, the plant-based protein is glycinin and β-conglycinin (e.g. obtained from soybean sources). In certain embodiments, the plant-based protein is amarantin (e.g. obtained from amaranth seed sources). In certain embodiments, the plant-based protein is helianthinin (e.g. obtained from sunflower seed sources). In certain embodiments, the plant-based protein is linin (e.g. obtained from flaxseed sources). In certain embodiments, the plant-based protein is cruciferin (e.g. obtained from rapeseed sources). In certain embodiments, the plant-based protein is prunin (e.g. obtained from almond kernel sources). In certain embodiments, the plant-based protein is zein (e.g. obtained from corn sources). In certain embodiments, the plant-based protein is edestin (e.g. obtained from hempseed sources). In certain embodiments, the plant-based protein is glutelin (e.g. obtained from rice, sorghum, wheat, and other (pseudo)cereal sources). In certain embodiments, the plant-based protein is globulin (e.g. obtained from sources of oat, pea, pumpkin, sesame, safflower, cottonseed, mung bean, red bean, kidney bean, chickpea, lupin, Brasil nut, hazelnut, peanut, apricot, walnut, pine tree kernels).

In certain embodiments, the animal-based protein is β-lactoglobulin (e.g. obtained from milk sources). In certain embodiments, the animal-based protein is keratin (e.g. obtained from feather sources). In certain embodiments, the animal-based protein is lysozyme (e.g. obtained from egg sources). In certain embodiments, the animal-based protein is BSA (e.g. obtained from bovine serum sources).

In certain embodiments, the protein is a combination of the proteins mentioned before.

### Physicochemical properties of proteins

| Protein | Source | Denaturation temperature (°C) | Isoelectric point (pI) |
|---|---|---|---|
| plant-based | | | |
| Patatin | potato | 55-80 | 4.8-5.2 |
| Glycinin | soybean | 80-90 | 4.5-5.0 |
| β-conglycinin | soybean | 70-80 | 4.5-5.0 |
| Amarantin | amaranth | 85-90 | 4.7-6.2 |
| Helianthinin | sunflower | 85-90 | 4.7-5.3 |
| Linin | flaxseed | 80-85 | 4.4-4.9 |
| Cruciferin | rapeseed | 85-95 | 4.8-6.8 |
| α-zein | corn | 65-75 | 5.0-7.0 |
| Edestin | hempseed | 85-95 | 4.8-5.8 |
| Legumins | lentil, chickpea | 85-95 | 5.5-6.5 |
| Vicilins | pea, lentil, bean | 70-85 | 4.5-5.5 |
| Prunin | almond | 77-90 | 5.0-5.5 |

| animal-based | | | |
|---|---|---|---|
| β-lactoglobulin | milk | 65-78 | ~5.2 |
| Keratin solubilised | feathers | 70-80 | ~4.7 |
| Lysozyme | egg | 72-77 | ~11.0 |
| BSA | bovine serum | 60-65 | ~4.7 |

In certain embodiments, a concentration of said protein nanofibrils is ≤3% (w/w). In certain embodiments, a concentration of said protein nanofibrils is ≤2% (w/w).

In certain embodiments, the oil comprises ≥90% (w/w) triglycerides.

In certain embodiments, the oil is derived from plant origin.

In certain embodiments, the oil has a density of 0.91-0.93 g/cm³.

In certain embodiments, the oil has a low viscosity of about 50-60 mPa·s at room temperature.

In certain embodiments, the oil has a surface tension of 30-35 mN/m.

Oils which are rich in poly-unsaturated fatty acids (PUFA) tend to demonstrate better oleogelation performance.

In certain embodiments, the oleogel comprises ≤ 0.8% (w/w) water. In certain embodiments, the oleogel comprises ≤ 0.6% (w/w) water. Due to the high oil content (over 97%) and the nonpolar nature of the oil, an oleogel does not contain an aqueous phase necessary for a meaningful pH measurement.

In certain embodiments, the lipophilic phase comprises 0 to 30% (w/w) of one or more components selected from the group of salt, sugar, terpenoid, fatty acid, amino acid, vitamin, and gelling agent. The presence of sodium chloride as well as dyes (colorants), e.g. low molecular weight ingredients, ensures the delivery of certain sensory characteristics to the oleogels. Adding high molecular weight structurants (sodium alginate, chitosan, k-carrageenan), phospholipids, e.g. lecithin, have not provided yet a suitable oleogelation in the hands of the inventors.

In certain embodiments, the oleogel does not comprise an organic solvent. In certain embodiments, the oleogel does not comprise acetone or THF. In certain embodiments, the oleogel does not comprise nickel.

### Features of the oleogel

In certain embodiments, the protein nanofibril-comprising composition exhibits birefringence under cross-polarized light. Protein nanofibrils exhibit a highly ordered cross-beta sheet structure, characterized by tightly packed, parallel beta-strands arranged perpendicular to the fibril axis. This alignment creates an anisotropic (direction-dependent) arrangement of molecules. The degree of chain alignment in a polymer affects its optical properties. Birefringence measurements can reveal information about the orientation and ordering of polymer chains. In manufacturing, birefringence can be used to detect the formation of protein nanofibrils.

In certain embodiments, the protein nanofibrils have an aspect ratio of ≤ 10 nm in diameter and ≥ 100 nm in length.

In certain embodiments, the protein nanofibrils have a highly positively charged surface. In certain embodiments, the protein nanofibrils exhibit an electrophoretic mobility of 1-2 µm·cm/V·s at pH 4.

In certain embodiments, the protein nanofibrils have a β sheet structure allowing to obtain a significant increase in fluorescence intensity with fluorescent dyes (e.g. triazole orange or/and Thioflavin T). Protein nanofibrils are characterized by a highly ordered, repetitive cross-β sheet structure. Triazole orange or/and Thioflavin T preferentially bind within the grooves or channels formed by these β-sheets. This binding is selective due to the regular, linear arrangement of β-sheets in protein nanofibrils creating a unique environment that the dye can intercalate into, unlike in non-amyloid or disordered proteins. This binding restricts molecular rotation of fluorophore, significantly enhancing its fluorescence.

In certain embodiments, a surface of an oil droplet in the oleogel is coated at a protein concentration ≥ 4 mg/m². This represents the density of the protein nanofibril layer accumulated on the surface of the droplets.

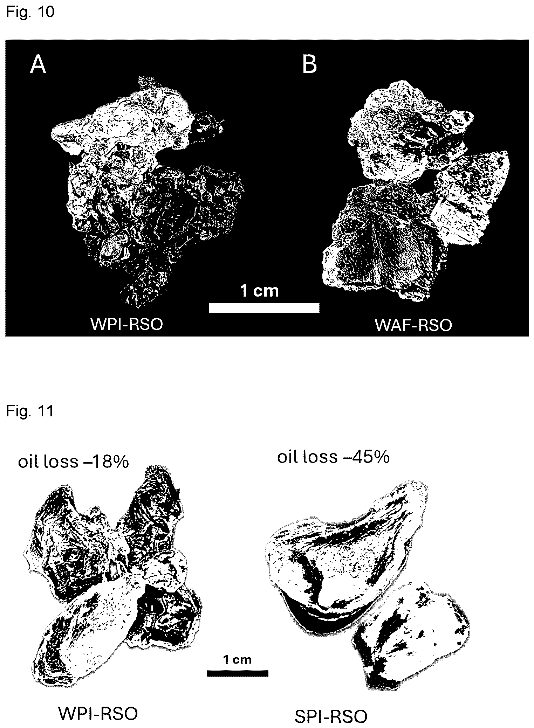

In certain embodiments, the oleogel is characterized in high stability when the oleogel is stored for four months at ambient conditions, as can be observed in Figure 10.

In certain embodiments, the oil is present as polyhedral droplets of 0.4 to 7 µm size, measured by confocal laser scanning microscopy and scanning electron cryomicroscopy.

In certain embodiments, the oleogel has a storage modulus ≥ 140 kPa at 1 rad/s.

In certain embodiments, the oleogel has a Young's modulus ≥ 400 kPa G' at 1 rad/s.

In certain embodiments, the protein nanofibrils form a protein layer of ≥10 nm thickness (measured by cryo scanning electron microscopy).

### Assays to measure the features mentioned

*Assay description: a pH below its isoelectric point referring to the pH at which the protein carries no net electrical charge, yielding an acidic protein solution.*

A protein's pl is one of the most comprehensively determined and widely reported characteristic quantities in biochemistry and proteomics. The isoelectric point (pl) is an intrinsic property of proteins and is defined as the value at which a protein carries a zero net charge. pl values are generally determined with either gel-based isoelectric focusing (IEF) or capillary isoelectric focusing (clEF) methods. Other less common methods are chromatofocusing, discontinuous electrophoresis, ion-exchange chromatography, and isoelectric precipitation (Pihlasalo, S., Auranen, L., Hänninen, P., & Härmä, H. (2012). Method for estimation of protein isoelectric point. Analytical chemistry, 84(19), 8253-8258).

Plant cells contain a vast array of proteins with different molecular weight and pl. The dissociation constant (pKₐ) of a polypeptide is determined by the presence of seven different charged amino acids; arginine, aspartate, cysteine, glutamate, histidine, tyrosine, and lysine. Post-translational modifications, protein-protein interactions, dipole interactions, and other biochemical factors also influence the *pl* of a protein. However, it is difficult to experimentally validate the pl and molecular weight of each individual protein in a proteome (Mohanta, T. K., Kamran, M. S., Omar, M., Anwar, W., & Choi, G. S. (2022). PlantMWplDB: a database for the molecular weight and isoelectric points of the plant proteomes. Scientific reports, 12(1), 7421).

Thus, we provide a table demonstrating the range of pl, measured experimentally based on data reported in the literature. Our innovation is focused on commercially available protein concentrates and isolates, which are a mixture of various proteins. At the isoelectric point, proteins, due to carrying a zero net charge, lose solubility and precipitate at a certain pH, which can be reached by adding alkali or acid, e.g. sodium hydroxide or hydrochloric acid solutions, to the protein solution.

*Assay description: a temperature above the protein denaturation temperature, which leads to the disruption of bonds and unfolding of the protein, following hydrolysis of the unfolded protein and self-assembly, yielding an protein nanofibril composition.*

Thermal characteristics of proteins are analyzed using a differential scanning calorimeter (DSC-821e, Mettler Toledo, Switzerland). The equipment is calibrated with indium and zinc, and an empty, sealed but pierced, aluminum pan is used for reference. Onset temperature (To) and peak or denaturation temperature (Td) is determined using the software STARe version 9.0x (Mettler Toledo) (Colombo, A., Ribotta, P. D., & León, A. E. (2010). Differential scanning calorimetry (DSC) studies on the thermal properties of peanut proteins. Journal of agricultural and food chemistry, 58(7), 4434-4439.).

*Assay description: the protein nanofibrils have an aspect ratio of* ≤ *10 nm in diameter and* ≥ *100 nm in length.*

Morphological characteristics of the protein nanofibrils can be measured by atomic force microscopy. AFM measurements are conducted using a Bruker MultiMode 8 scanning probe microscope (Bruker, Billerica, MA, U.S.A.), operating in tapping mode under ambient conditions with a commercial silicon nitride cantilever (Bruker, Billerica, MA, U.S.A.) at a vibration frequency of 150 kHz. AFM images are flattened using Nanoscope 8.1 software (Bruker, Billerica, MA, U.S.A.). To characterise the morphology of the protein nanofibrils, statistical analysis of AFM images is performed by using the open-source software FiberApp (Usov & Mezzenga, 2015). The aspect ratio is measured as the length of the fibril (contour length) divided by the fibril's diameter (average height). (Usov, I., & Mezzenga, R. (2015). FiberApp: An open-source software for tracking and analyzing polymers, filaments, biomacromolecules, and fibrous objects. Macromolecules, 48(5), 1269-1280)

*Assay description: the protein nanofibrils have a highly positively charged surface, particularly protein nanofibrils exhibit an electrophoretic mobility of 1-2 µm·cm*/*V·s at pH 4.*

Electrophoretic mobility of the protein nanofibrils was determined using a particle electrophoresis instrument (Nano ZS, Malvern Instruments, Malvern, UK) at a constant temperature of 25°C. All experiments were performed in triplicate. (Peydayesh, M., Kistler, S., Zhou, J., Lutz-Bueno, V., Victorelli, F. D., Meneguin, A. B., Spósito, L., Bauab, T. M., Chorilli, M., & Mezzenga, R. (2023). Amyloid-polysaccharide interfacial coacervates as therapeutic materials. Nature communications, 14(1))*.*

### Assay description: oil has a low viscosity of about 50-60 mPa·s at room temperature

Measurements of the viscosity are done in a viscometer (model LV DVII-Brookfield, Middleboro, MA, USA), with a small sample adapter, spindle 31, which permits the use of only 20 ml of oil in each analysis. The temperature is controlled using a water bath with the precision of ±2 °C. (Santos, J. C. O., Santos, I. M. G., & Souza, A. G. (2005). Effect of heating and cooling on rheological parameters of edible vegetable oils. Journal of Food Engineering, 67(4), 401-405.; Diamante, L. M., & Lan, T. (2014). Absolute viscosities of vegetable oils at different temperatures and shear rate range of 64.5 to 4835 s- 1. Journal of food processing, 2014(1), 234583.)

### Assay description: oil has a surface tension of 30-35 mN/m

A Krüss digital tensiometer with platinum plate (Model K10ST; Hamburg, Germany) is used for the measurement of equilibrium oil-air surface tensions. A circulating auto-thermostated bath was connected to the tensiometer to control the temperature. Values are recorded after 20 min, which is shown to be sufficient to reach equilibrium. (Xu, T., Rodriguez-Martinez, V., Sahasrabudhe, S. N., Farkas, B. E., & Dungan, S. R. (2017). Effects of temperature, time and composition on food oil surface tension. Food Biophysics, 12, 88-96.)

### Assay description: oleogel has a storage modulus ≥ 140 kPa at 1 rad/s

To obtain storage modulus (G') at 1 rad/s, the oleogels are measured with a rotational rheometer Anton Paar MCR 501 (Anton Paar, Graz, Austria). The oscillatory sweeping tests are carried out using a measuring system PP25/S, parallel plate with sandblasted 25 mm diameter at 20 °C. The gap between the two measuring plates is adjusted according to the height of the preprepared disk-like shaped oleogel samples, to ensure that the upper plate is in contact with the surface of the oleogels themselves, but without inducing large compression forces on them (which could have altered their micro- and mesoscopic features). The frequency sweep is performed within the linear viscoelasticity region, increasing frequency from 0.1 to 100 rad/s to obtain storage (G') and loss (G") moduli. (Usuelli, M., Germerdonk, T., Cao, Y., Peydayesh, M., Bagnani, M., Handschin, S., Nyström, G. & Mezzenga, R. (2021). Polysaccharide-reinforced amyloid fibril hydrogels and aerogels. Nanoscale, 13(29), 12534-12545.)

*Assay description: oleogel has a Young's modulus* ≥ *400 kPa G' at 1 rad*/*s* Young's modulus is calculated from storage modulus (G') at 1 rad/s. The relationship between extensional (Young's) modulus and shear modulus arises from the assumption of incompressibility of the material tested. For linear elastic materials, the equation E = 3G (where G is the shear modulus) holds when Poisson's ratio (v) is 0.5. In the context of dynamic mechanical analysis, the storage modulus (G') measured at a specific angular frequency (1 rad/s) is often used as an estimate for the shear modulus (G) when the material behaviour is predominantly elastic at that frequency. (Chippada, U., Yurke, B., & Langrana, N. A. (2010). Simultaneous determination of Young's modulus, shear modulus, and Poisson's ratio of soft hydrogels. Journal of Materials Research, 25(3), 545-555.)

Wherever alternatives for single separable features are laid out herein as "embodiments", it is to be understood that such alternatives may be combined freely to form discrete embodiments of the invention disclosed herein. Thus, any of the alternative embodiments for an oil may be combined with any of the alternative embodiments of a protein, and these combinations may be combined with any method step mentioned herein.

The invention further encompasses the following items:

### Items:

1. An oleogel comprising a plurality of protein nanofibrils, and ≥95% of a lipophilic phase (w/w), and comprising ≤3% (w/w) emulsifier, particularly comprising no emulsifier.
2. A method for production of an oleogel, the method comprising the steps:
   a. providing a protein nanofibril-comprising composition;
   b. in an emulsifying step, exposing the protein nanofibril-comprising composition to an emulsifying condition selected from the group of
      i. high intensity ultrasound; and/or
      ii. high pressure; and/or
      iii. microfluidization;
      in presence of an oil, yielding a Pickering emulsion;
   c. in a water-removing step, exposing the Pickering emulsion to a drying condition selected from the group of
      i. centrifugation; and/or
      ii. filtration, and/or
      iii. evaporation, and/or
      iv. freeze-drying;
      yielding an oleogel.
3. The method according to item 2, wherein the protein nanofibril-comprising composition is produced by a method comprising the steps:
   a. exposing a protein to a pH below its isoelectric point, yielding an acidic protein solution;
   b. exposing the acidic protein solution to a temperature above the protein denaturation temperature, yielding a protein nanofibril-comprising composition.
4. The method according to any one of items 2 or 3, wherein the protein is an amyloidogenic plant- or animal-based protein.
5. The method according to item 4, wherein the plant-based protein is selected from the group of
   - patatin,
   - glycinin and β-conglycinin,
   - amarantin,
   - helianthinin,
   - linin,
   - cruciferin,
   - prunin,
   - zein,
   - edestin,
   - glutelin,
   - globulin.
6. The method according to item 4, wherein the animal-based protein is selected from the group of
   - β-lactoglobulin,
   - keratin,
   - lysozyme,
   - BSA.
7. The method according to any one of items 2 to 6, wherein the protein nanofibril-comprising composition exhibits birefringence under cross-polarized light.
8. The method according to any one of items 2 to 7, wherein the lipophilic phase comprises ≥90% (w/w) oil.
9. The method according to item 8, wherein the oil comprises ≥90% (w/w) triglycerides.
10. The method according to any one of items 2 to 9, wherein an oil which is less fluidic is pre-heated before the emulsifying step, particularly pre-heated to 40 to 60°C.
11. The method according to any one of items 2 to 10, wherein the emulsifying condition is high intensity ultrasound.
12. The method according to any one of items 2 to 10, wherein the emulsifying condition is high pressure.
13. The method according to any one of items 2 to 10, wherein the emulsifying condition is microfluidization.
14. The method according to any one of items 2 to 13, wherein the drying condition is centrifugation.
15. The method according to any one of items 2 to 13, wherein the drying condition is filtration.
16. The method according to any one of items 2 to 13, wherein the drying condition is evaporation.
17. The method according to any one of items 2 to 13, wherein the drying condition is freeze-drying.
18. An oleogel obtained by the method of any one of items 2 to 17.
19. The oleogel according to any one of items 1 or 18, wherein the protein nanofibrils have an aspect ratio of ≤ 10 nm in diameter and ≥ 100 nm in length.
20. The oleogel according to any one of items 1 or 18 to 19, wherein the protein nanofibrils have a highly positively charged surface, particularly protein nanofibrils exhibit an electrophoretic mobility of 1-2 µm·cm/V·s at pH 4.
21. The oleogel according to any one of items 1 or 18 to 20, wherein the protein nanofibrils have a β sheet structure allowing to obtain a significant increase in fluorescence intensity with fluorescent dyes, e.g. triazole orange or/and Thioflavin T.
22. The oleogel according to any one of items 1 or 18 to 21, wherein the protein nanofibrils originate from an amyloidogenic plant- or animal-based protein.
23. The oleogel according to item 22, wherein the plant-based protein is selected from the group of
   - patatin,
   - glycinin and β-conglycinin,
   - amarantin,
   - helianthinin,
   - linin,
   - cruciferin,
   - prunin,
   - zein,
   - edestin,
   - glutelin,
   - globulin.
24. The oleogel according to item 22, wherein the animal-based protein is selected from the group of
   - β-lactoglobulin,
   - keratin,
   - lysozyme,
   - BSA.
25. The oleogel according to any one of items 1 or 18 to 24, wherein a surface of an oil droplet in the oleogel is coated at a protein concentration ≥ 4 mg/m².
26. The oleogel according to any one of items 1 or 18 to 25, wherein said oil comprises ≥90% (w/w) triglyceride.
27. The oleogel according to any one of items 1 or 18 to 26, wherein said oil has a density of 0.91-0.93 g/cm³.
28. The oleogel, according to any one of items 1 or 18 to 27, wherein said oil has a low viscosity of about 50-60 mPa·s at room temperature.
29. The oleogel according to any one of items 1 or 18 to 28, wherein said oil has a surface tension of 30-35 mN/m.
30. The oleogel according to any one of items 1 or 18 to 29, wherein said oleogel comprises 0 to 30% (w/w) of one or more components selected from the group of salt, sugar, terpenoid, fatty acid, amino acid, vitamin, and gelling agent.
31. The oleogel according to any one of items 1 or 18 to 30, wherein said oleogel is characterized in high stability when the oleogel is stored for four months at ambient conditions.
32. The oleogel according to any one of items 1 or 18 to 31, wherein said oil is present as polyhedral droplets of 0.4 to 7 µm size.
33. The oleogel according to any one of items 1 or 18 to 32, wherein a concentration of said protein nanofibrils is ≤3% (w/w), particularly ≤2% (w/w).
34. The oleogel according to any one of items 1 or 18 to 33, wherein said oleogel does not comprise an organic solvent, particularly said oleogel does not comprise acetone or THF.
35. The oleogel according to any one of items 1 or 18 to 34, wherein said oleogel does not comprise nickel.
36. The oleogel according to any one of items 1 or 18 to 35, wherein said oleogel comprises ≤ 0.8% (w/w) water, particularly ≤ 0.6% (w/w) water.
37. The oleogel according to any one of items 1 or 18 to 36, wherein said oleogel has a storage modulus ≥ 140 kPa at 1 rad/s.
38. The oleogel according to any one of items 1 or 18 to 37, wherein said oleogel has a Young's modulus ≥ 400 kPa G' at 1 rad/s.
39. The oleogel according to any one of items 1 or 18 to 38, wherein said protein nanofibrils form a protein layer of ≥10 nm thickness.

The invention is further illustrated by the following examples and figures, from which further embodiments and advantages can be drawn. These examples are meant to illustrate the invention but not to limit its scope.

### Description of the Figures

- Fig. 1: shows flow-chart of oleogelation with protein nanofibrils.
- Fig. 2: shows AFM images (A) and mesoscopic characteristics of whey (B), soy (C) and potato (D) protein nanofibrils. AH - average height, CL - contour length, PL - persistence length.
- Fig. 3: shows Pickering emulsions stabilized by protein nanofibrils: light microscopy images (A), particle size distribution (B), viscosity, interfacial protein concentration, and HIPE yield of compressed emulsions (C)
- Fig. 4: shows photographs (A) and confocal laser scanning microscopy images (B) of protein nanofibril-templated oleogels.
- Fig. 5: shows CryoSEM images of oleogels, based on MCT oil and whey (A1-A3), soy (B1-B3) or potato (C1-C3) protein nanofibrils.
- Fig. 6: shows oil encapsulation efficiency and absorbed protein nanofibrils during oleogelation (A). Colour (B), composition (C), and frequency sweep tests (D) of protein nanofibril-templated oleogels. Loss of oil during oleogelation (E).
- Fig. 7: shows photographs of various oleogels, produced with plant-based amaranth, flaxseed seed, chickpea protein nanofibrils (A) and fish, hempseed, agran, flaxseed, proso millet, amaranth oils (B); comprising cannabidiol (full spectrum), vitamin D3, sodium chloride, Rhodamine B, Nile red (C)
- Fig. 8: shows photographs of fractured protein nanofibril-templated oleogels.
- Fig. 9: shows AFM images of protein isolate solutions (pH 2) before fibrillization: whey (A), soy (B), potato (C).
- Fig. 10: shows stability of oleogels, produced with monomeric whey protein isolate (A) and whey protein nanofibrils (B) after four months of storage at ambient conditions.
- Fig. 11: shows performance of monomeric proteins (pH 2) in oleogelation. Oil loss represents oil (%) lost during oleogelation.

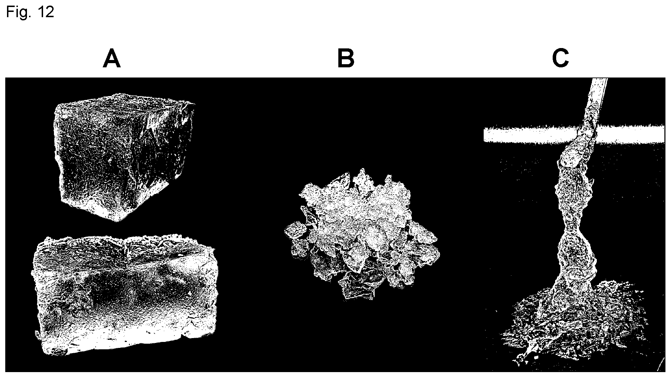

- Fig. 12: Protein nanofibril-templated oleogels, produced by intoducing high pressure homogenisation (A), freeze-drying of the Pickering emulsion (B) or cooling and freeze-drying of HIPE emulsion after centrifugation (C).

### Description of the Tables

| | |
|---|---|
| Table. 1 | shows electrophoretic mobility and surface hydrophobicity of protein nanofibrils. |
| Table. 2 | shows droplet size (mean ± SD and range, µm) of protein nanofibril-templated oleogels. |

### Examples

### Example 1: Characterisation of protein nanofibrils morphology and their surface properties

Fibrillization of food proteins has become a promising strategy to enhance proteins functionality and broaden their applications in various fields of food and material innovations. During fibrillization, proteins undergo a substantial transformation from the folded state to nanofibrils with a high aspect ratio and multiple functional groups exposed on the surface of the fibril. Favourable fibrillization conditions, which depend on the protein's primary structure, lead to unfolding, hydrolysis and protein self-assembly into well-ordered protein nanofibrils with different morphologies.

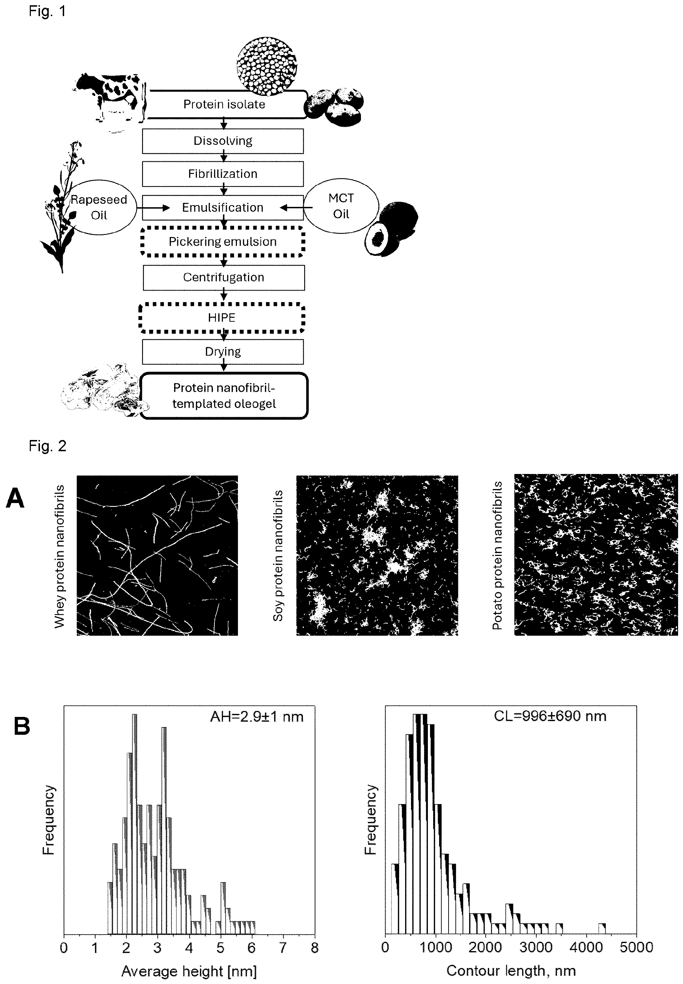

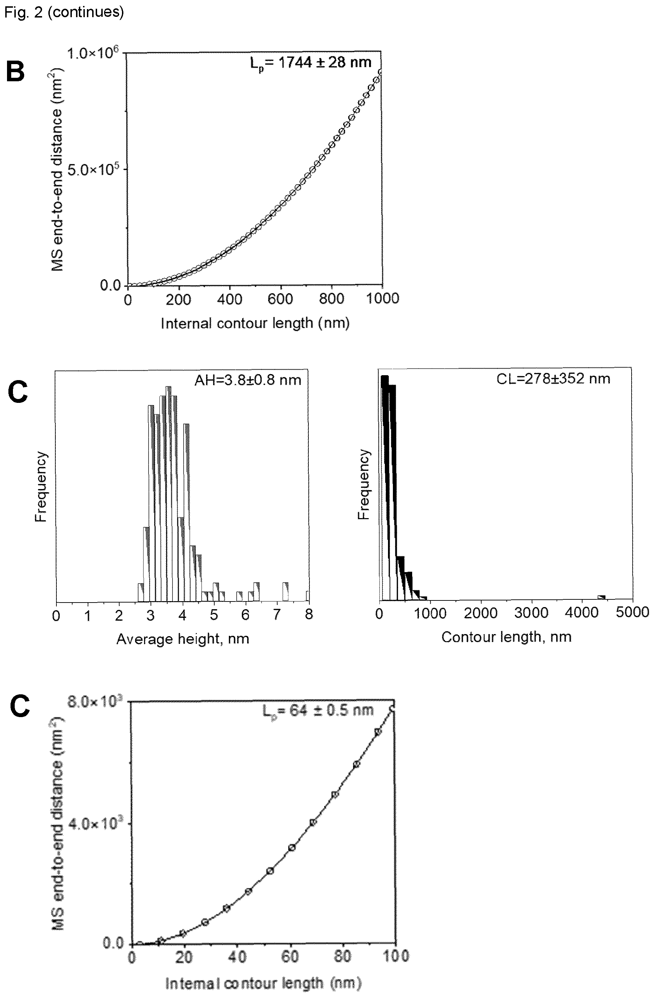

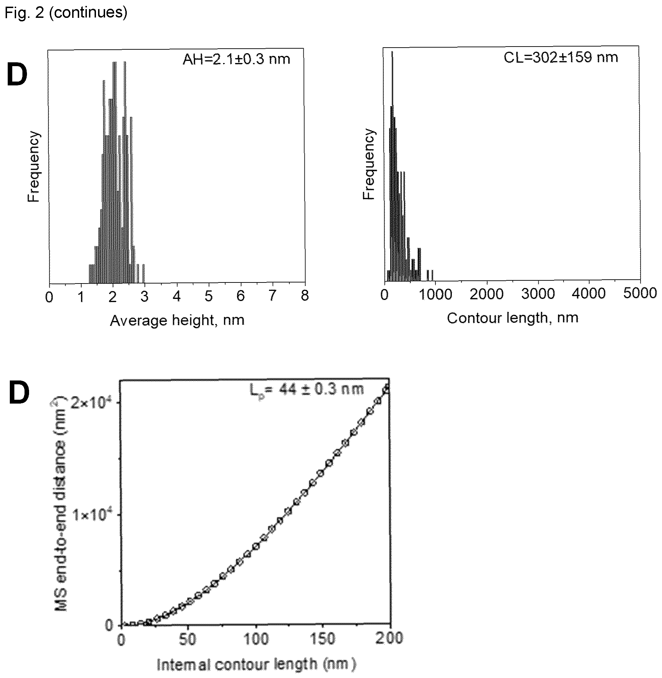

Structural or mesoscopic characteristics, such as contour and persistence length (Lₚ), modulate the emulsifying properties of protein nanofibrils. According to preliminary experiments, the best oleogelating capacity of protein nanofibrils was achieved at a concentration of 3 and 4 % w/w for PPI and WPI/SPI due to the different primary structure of the employed animal and plant proteins. In Fig. 2 AFM images of protein nanofibrils produced from animal (whey) and plant (soy and potato) proteins are shown, displaying significantly different morphologies. Whey protein nanofibrils (WAF) featured a semi-flexible nature and a large contour length up to 4.5 µm (Fig. 2). Most of the whey protein nanofibrils were formed by several protofilaments (2-3) with 2-6 nm average height, though the plant proteins revealed less diverse distribution of average height, which varied from 2 to 4 nm. As the potato proteins consist of patatin or potato albumin, they were self-assembled into morphologically identical potato protein nanofibrils (PAF), which aligns with previous findings.. In contrast, soy protein nanofibrils (SAF) were formed from peptides released by hydrolysis of 7S (β-conglycinin) and 11S (glycinin) globulins. Thus, the more complex composition of soy proteins induced a pronounced polymorphism of soy protein nanofibrils, as shown in Fig. 2. AFM imaging revealed the coexistence of two populations of nanofibrils. The dominant fraction of SAF exhibited worm-like behaviour. Although long and semi-flexible aggregates represented the second population of SAF, they did not contribute significantly to the total persistence length of the nanofibrils. The protein nanofibrils, that were produced from plant proteins, showed high flexibility with Lₚ of 64 and 44 nm for soy and potato protein nanofibrils, respectively. Whey protein nanofibrils demonstrated a 30-fold persistence length compared to the protein nanofibrils produced from plant proteins, which is consistent with results previously reported in the literature. Plant proteins usually have a diverse composition, and during hydrolysis they tend to release larger peptides, promoting protein self-assembly into worm-like protein nanofibrils with a low persistence length. In addition, more thermostable plant globulins require longer heating to ensure a sufficient rate of protein hydrolysis and, hence, self-assembly. In contrast, the heat-induced acidic hydrolysis of β-lactoglobulin, the major protein of whey, releases 2-8 kDa peptides that then facilitate the formation of semi-flexible, multistranded and twisted protein nanofibrils.

Despite the critical importance of structural properties, the performance of protein nanofibrils in emulsification is also associated with surface activity, affecting the formation and stability of the interface. Animal and plant protein nanofibrils, at the synthesis pH 2, exhibited different electrophoretic mobilities ranging from 2.08 (SAF) to 2.85 µmcm/Vs (WAF). The high aspect ratio and the structural reorganisation of the peptides after fibrillization can provide better exposure of the positively charged groups in acidic conditions. Thus, the stability of the emulsions can be promoted through electrostatic repulsion. WAF and SAF also demonstrated higher hydrophobicity than the protein aggregates formed by the potato proteins (Table 1), contributing to the surface activity of protein nanofibrils.

### Example 2: Characterisation of Pickering emulsions stabilised by protein nanofibrils

Pickering oil-in-water emulsions are formed by solid-like particles, which create the interface on the surface of the oil droplets and reduce the possibility of coalescence by forming a physical barrier between the immiscible oil and water phases. RSO and MCT oil were emulsified by ultrasonication (Fig. 1), which is known to improve the gelling properties of proteins and stabilise emulsions by disrupting oil droplets through capillary shock waves, acoustic cavitation and turbulence.

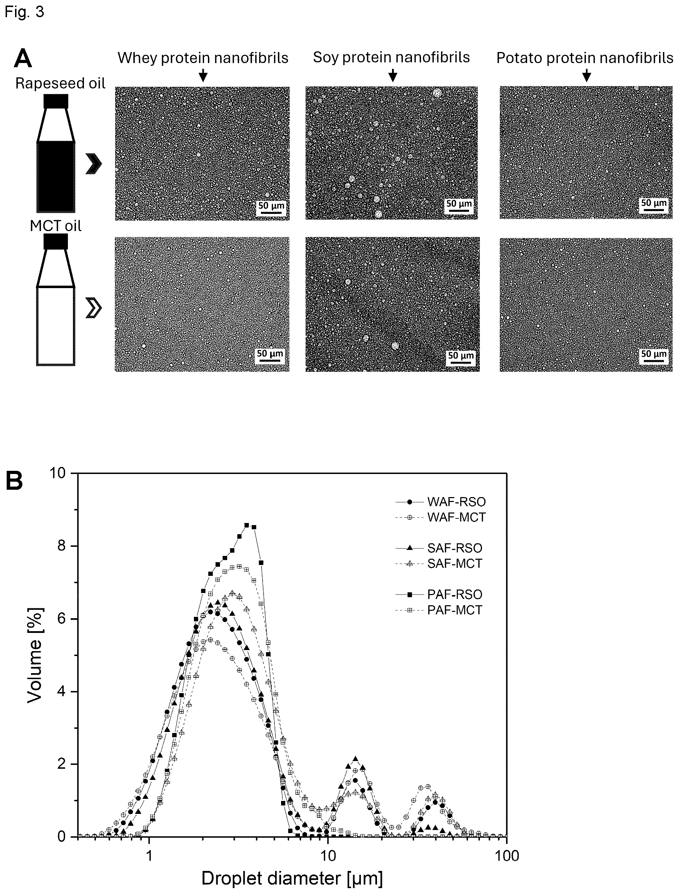

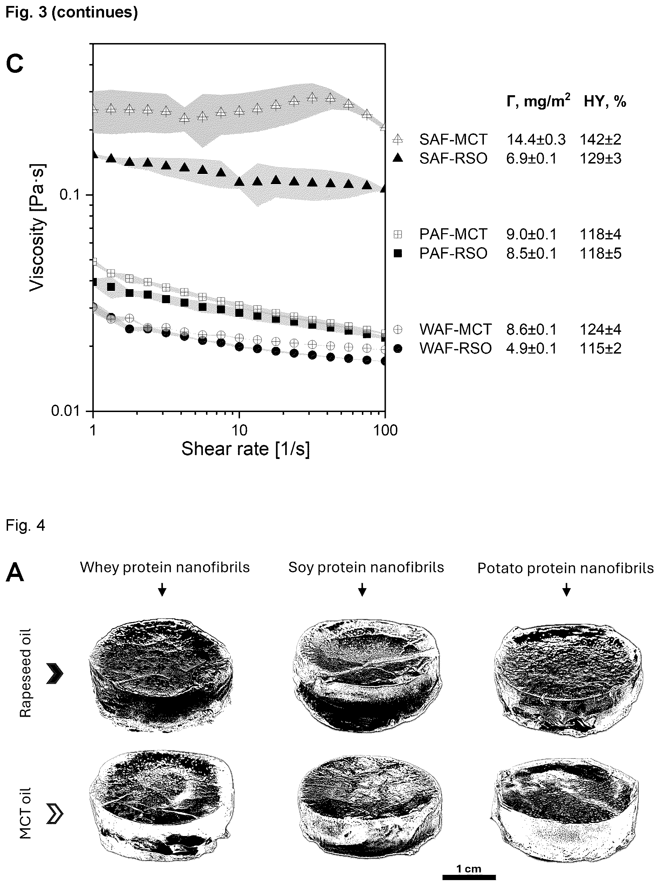

Optical microscopy of the Pickering emulsions revealed the formation of finely dispersed oil droplets (Fig. 3A). The primary factor influencing the nature of the emulsions was the type of protein nanofibrils used to stabilise the oil-in-water emulsion (Fig. 2 and 3), with the least polydisperse emulsion being formed when using PAF. We observed that the Pickering emulsions stabilised by WAF and SAF revealed the appearance of two additional populations of RSO and MCT oil droplets of ~ 15 and 30 µm size (Fig. 3B). The occurrence of larger oil droplets can be related to longer fibrils present in the protein nanofibril dispersions (Fig. 2). At the same time, the rigidity of the protein nanofibrils did not appear to affect the particle size distribution and the viscosity of the Pickering emulsions, displaying shear-thinning behaviour (Fig. 3C). Notably, SAF induced the formation of the self-supporting gel after ultrasonication, in contrast to the Pickering emulsions stabilised by WAF and PAF, which maintained low viscosity fluid behaviour. Such a striking difference in the viscosity of the emulsions could be attributed to a higher propensity of these protein nanofibrils to bind water by enhanced hydrogen bonding. After centrifugation of the Pickering emulsions stabilised by the protein nanofibrils (Fig. 1), the yield of HIPE formed by SAF was 129 and 142 % for RSO and MCT, respectively. Note that the yield is larger than 100% since the HIPE contains the pristine oil plus entrapped water, leading to a ratio H/O larger than 1 (see eq. 3). The fluidic WAF and PAF emulsions led to much lower HIPE yields, ranging from 115 to 123 % (Fig. 3C).

All protein nanofibrils-based Pickering emulsions showed high stability during storage over two months at ambient temperature without any phase separation or microbial growth. One of the stabilisation mechanisms for Pickering emulsions is the formation of steric barriers by solid particles at the oil-water interface. Droplet aggregation in the protein-based emulsions, prepared under acidic conditions, can be prevented by a combination of strong electrostatic and steric repulsion, inducing the formation of the protein layer at the oil-water interface (Taha et al., Trends in Food Science & Technology, 105, 2020). It was previously reported that under acidic conditions (pH 3), the emulsifying properties of pea proteins were improved due to protein absorption at the interface and higher viscoelasticity of the interfacial films. The interface formation can also be promoted by the surface activity of the protein nanofibrils with a high aspect ratio (Fig. 2) and exposed functional groups on the fibrils. Thus, Pickering emulsions formed by the protein nanofibrils exhibit high stability compared to emulsions based on monomeric.

### Example 3: Oleogels structured by protein nanofibrils

To impart the solid-fat functionality to the liquid oil, the oil-in-water Pickering emulsions stabilised by the protein nanofibrils were compressed into HIPE gel by centrifugation (Fig. 1). This allowed the oil droplets, densely covered by protein nanofibrils, to approach each other and pack tightly. The interfacial layers, therefore, may intermingle or compress via steric interaction between the emulsion droplets (McClements, Food Emulsions, 2015). HIPE can encapsulate more than 74 % of oil within a continuous phase formed by a protein layer. In protein-based oleogelation, the formation of such interfaces in a hydrophobic environment is facilitated by hydrophilic interaction via hydrogen bonds between the protein aggregates (Scholten, *Edible Oleogels,* 2018).

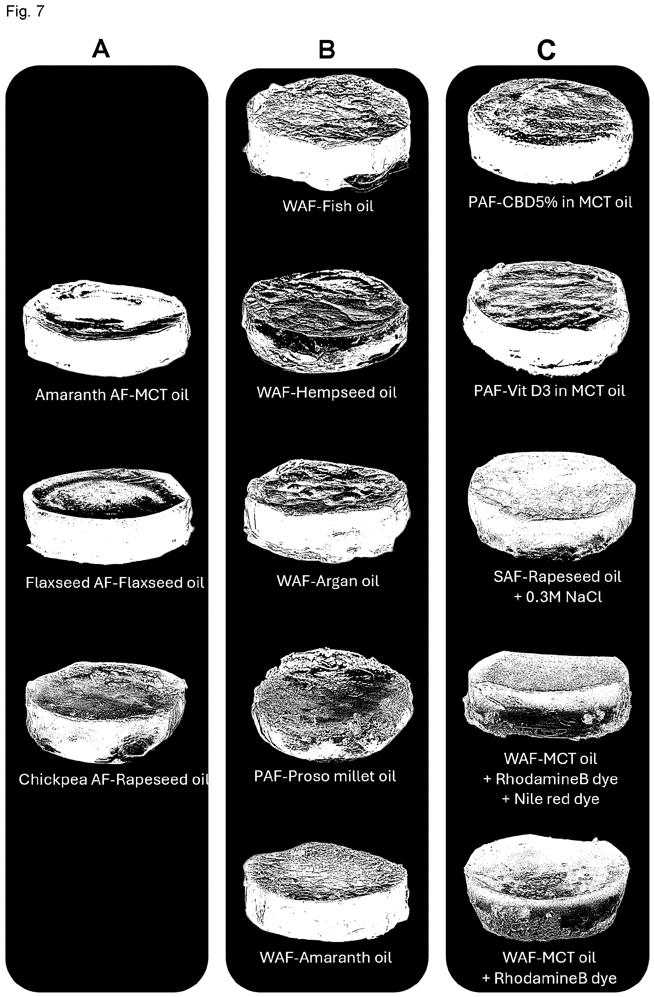

Fig. 4A, 7 and 8 illustrate the visual appearance of the oleogels produced by drying HIPE and structured using protein nanofibrils from both animal and plant sources. In addition to whey, soy, and potato protein nanofibrils, Fig. 7A reveals the high oleogelation capacity of amaranth, flaxseed, and chickpea protein nanofibrils. Furthermore, the protein nanofibril-templated oleogelation demonstrates versatility by solidifying various oils, including fish, hempseed, flaxseed, argan, proso millet and amaranth oil (Fig. 7A, B), and by successful incorporation of additional ingredients into the formulations (Fig. 7C).

### Microscopic characterisation of oleogels by CLSM and CryoSEM

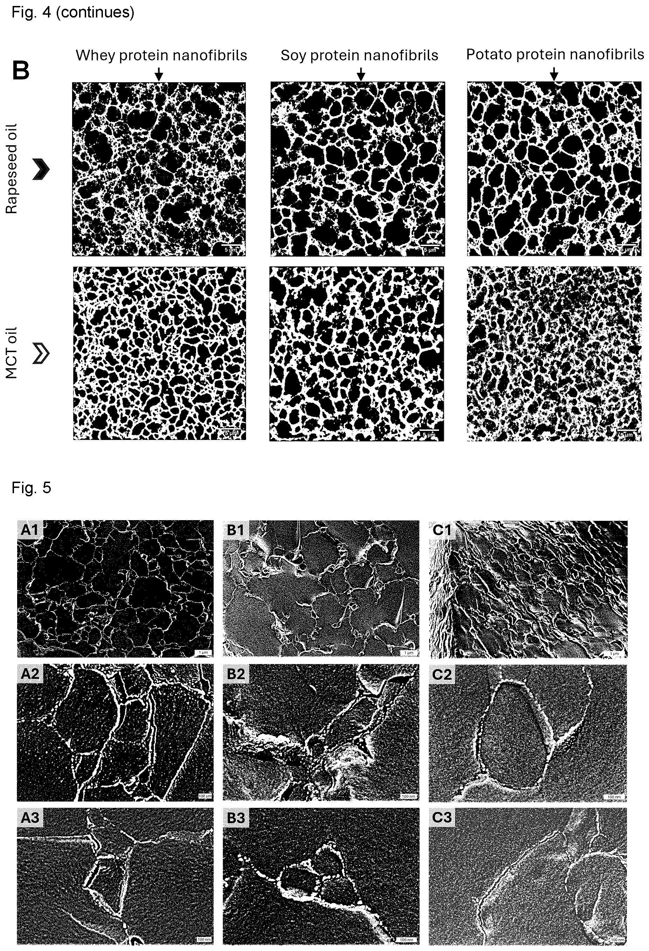

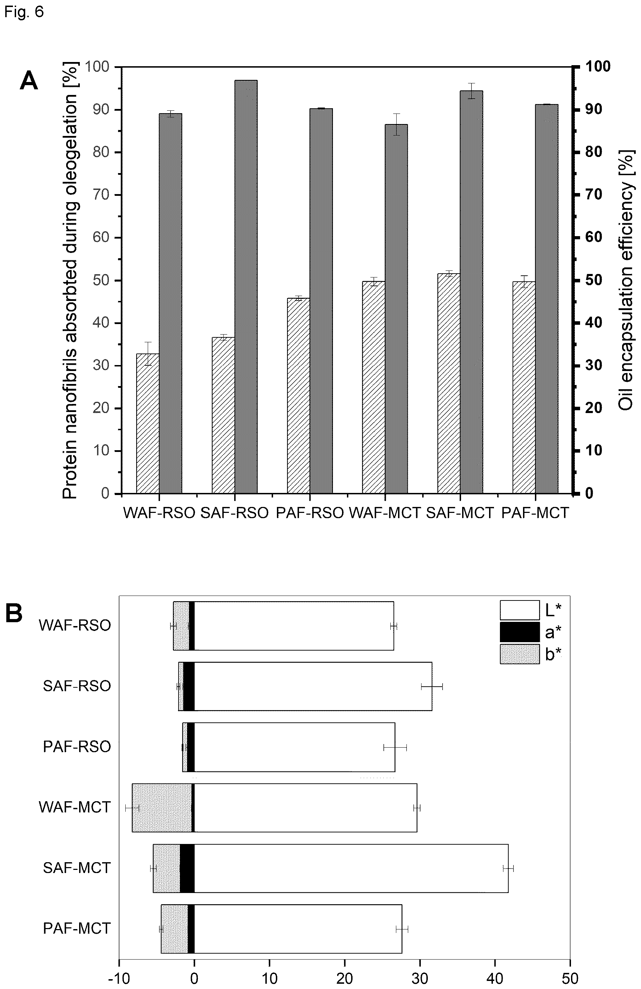

The microstructure of the oleogels was characterised by different microscopic techniques (Figs. 4 and 5). Centrifugal forces are known to enable the transformation of oil droplets from the energetically favourable spherical state (Fig. 3A) to a polyhedral shape. Fig. 4B shows that the fluorescent-labelled protein nanofibrils were absorbed onto the surface of the oil droplets, forming a 'sponge-like' network to structure the oil into a stable gel. We observed that the tightly packed polyhedral droplets, typically formed in HIPE gels, exhibited different arrangements of the droplets depending on the type of protein nanofibrils and the oil used for the oleogelation. RSO oleogels presented a more irregular distribution of the polyhedral droplets with the presence of larger oil droplets, which can be related to a more heterogeneous composition of RSO compared to MCT oil, free of minor and polar components. Incorporating SAF and PAF into the oleogel resulted in a broader size distribution of the polygonal droplets (Tab. 2). These oleogels demonstrated a similar average 'diameter' of around 2.3±1 µm, which aligns with the PSD results in the Pickering emulsions (Fig. 3B). The presence of a third characteristic dimension, in the order of tens of µm, in the PSD data, should be interpreted with caution. While such droplets could effectively exist and might have potentially eluded the microscopy analysis, it has to be considered that the PSD characterisation was performed after diluting the emulsions with MilliQ water at neutral pH, to an extent needed by the instrument to reduce influences from multiple scattering. Such a dilution could bring the adsorbed proteins closer to their isoelectric point, leading therefore to a less stable emulsion and, potentially, to agglomeration phenomena that are less likely to occur in the original emulsion at pH 2. MCT oleogels, structured by the protein nanofibrils, showed distinct differences in the internal organisation of the interfacial network and higher absorption rate ~ 50 % (Fig. 6A). MCT oil may promote specific interfacial behaviour of the oleogelators with different mesoscopic characteristics (Fig. 2). Therefore, the microstructure of MCT oleogels presented a narrower size distribution of the oil droplets and revealed a more homogeneous network, formed by the protein nanofibrils. Interestingly, more uniformly structured oleogels with 1.5±0.5 µm polyhedral droplets were formed by more morphologically uniform whey and potato protein nanofibrils (Figs. 2 and 4). In contrast, MCT oleogels structured by SAF had a similar distribution of the oil droplets compared to the RSO oleogel. The SAF network revealed the embedding of the oil droplets in the less densely packed mesh, which tended to be formed by the interconnected and finely dispersed droplets (Fig. 4B). This might explain why the highest interfacial protein concentration of 14.4 mg/m3 was achieved in the SAF-MCT oleogel (Fig. 3C), which exhibited larger polyhedral oil droplets of ~ 2.3±0.8 µm.

CryoSEM provides superior resolution imaging compared to CLSM, thereby overcoming the 200 nm resolution limit. This facilitates exploration of the oleogels' network structure. Fig. 5 demonstrates the formation of polyhedral oil droplets due to the stretching of the droplet surface during the oleogelation. Interestingly, the shape of the polyhedral droplets was attributed to the type of protein nanofibrils structuring liquid oil and, therefore, emanated from their mesoscopic characteristics (Fig. 2). For instance, in some polyhedral droplets rigid whey protein nanofibrils exhibited particularly straight edges (Fig. 5A). The introduction of worm-like soy or potato protein nanofibrils 'rounded' the shapes of the oil droplets. Moreover, the soy protein nanofibrils tended to form a more complex structure, including two phases of relatively large oil droplets (2.3±0.8 µm) surrounded by small oil nanodroplets of ~ 100 nm (Fig. 5B), which were visible by CryoSEM due to its high resolution. This observation is consistent with the CLSM appearance of SAF films in the MCT oleogel (Fig. 4B). We also observed that the protein layer thickness followed the order PAF < WAF ≤ SAF and varied in the range of 11-19 nm. The oil-water protein-stabilized interface is known to present 1-15 nm thickness with a surface load of about 10 mg/m2 (Berton-Carabin et al., Annual Review of Food Science and Technology, 9, 2018). The thickness of the formed interface might be associated with the average height of the protein nanofibrils (Fig. 2). For example, PAF, presenting the lowest average height and hydrophobicity (Table 1), formed the thinnest network. Based on the observed thickness, the network was formed by stacking of the protein nanofibrils on the surface of the oil droplet, allowing a dense absorption layer to occur.

### Composition, colour and water activity of oleogels structured by protein nanofibrils

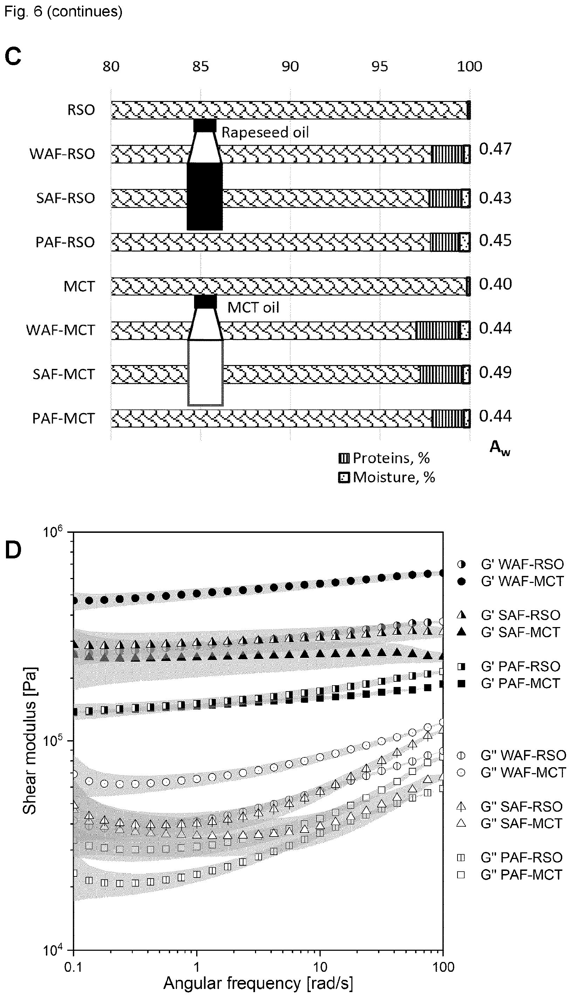

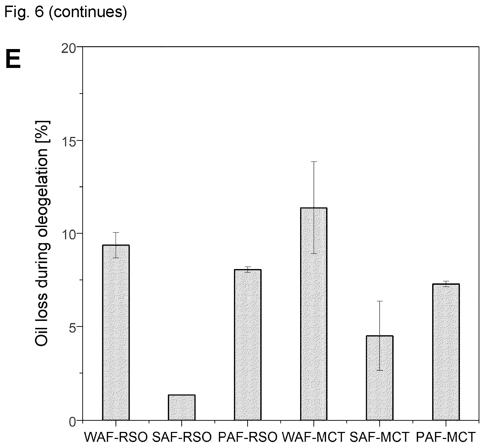

The liquid rapeseed and MCT oils were turned into edible solid-like materials (Fig. 4A) by converting the Pickering oil-in-water emulsions, stabilized by protein nanofibrils, into high internal phase emulsions (HIPE), which were then dried to form oleogels (Fig. 1). Although the bulk properties of oleogels depend on the droplet size and the oil volume fraction in HIPE-gels, the type of protein nanofibrils used for oleogelation had a significant impact on the interfacial structure and composition of the material (Fig. 6). The produced oleogels demonstrated different transparency and colour (Fig. 4A, 6B), depending on the type of oil or the protein nanofibrils introduced during the oleogelation. The formation of more transparent oleogels was a characteristic of WAF or PAF, utilised to solidify the liquid oils. However, the opaque SAF-oleogels showed a higher lightness (Fig. 6B). This can be explained by more intense light scattering as the interfacial network contained small, rounded oil droplets intercalated between large polyhedral droplets, as demonstrated by CLSM and CryoSEM (Figs. 4B and 5B).

HIPE usually requires high surfactant concentrations of 5-50 % w/w. This study shows that the formation of HIPE eventually converted into oleogels is possible at low protein concentrations (1.7-2.5 %) when proteins are functionalised by fibrillization (Fig. 6C). Therefore, this approach allowed the production of the oleogels with only 1.6-1.8 % and 1.8-2.5 % protein content for RSO and MCT oleogels, respectively. The protein nanofibril-templated oleogels contained 97-98 % oil (dry weight). This is in contrast to previously reported oleogels based on oil and protein (~ 10-16 %), which reached up to 91 % oil using non-food-grade solvents such as acetone or THF during oleogelation, but compares with the work of Romoscanu & Mezzenga (Romoscanu & Mezzenga, Langmuir, 22, 2006), where, however, the emulsion had to undergo a significant heating step to crosslink the protein layer.

Following the proposed protocol (Fig. 1), we obtained solid-like oil structured by the protein nanofibrils, with a low moisture content ranging from 0.3 to 0.6 % (Fig. 6C). This water can be considered as entrapped between the protein nanofibrils forming the continuous network in the oleogels. The present water usually plays an important role in the oleogelation and allows tuning of the rheological properties of protein and starch-based oleogels. The oleogels, stabilised by the protein nanofibrils, showed a low water activity in the range of 0.43-0.49 (Fig. 6C), ensuring the stability of this food material during storage. Thus, capillary bridges were unlikely to play a role in fibril-fibril interaction in the interface as they require a minimal water activity above 0.75.

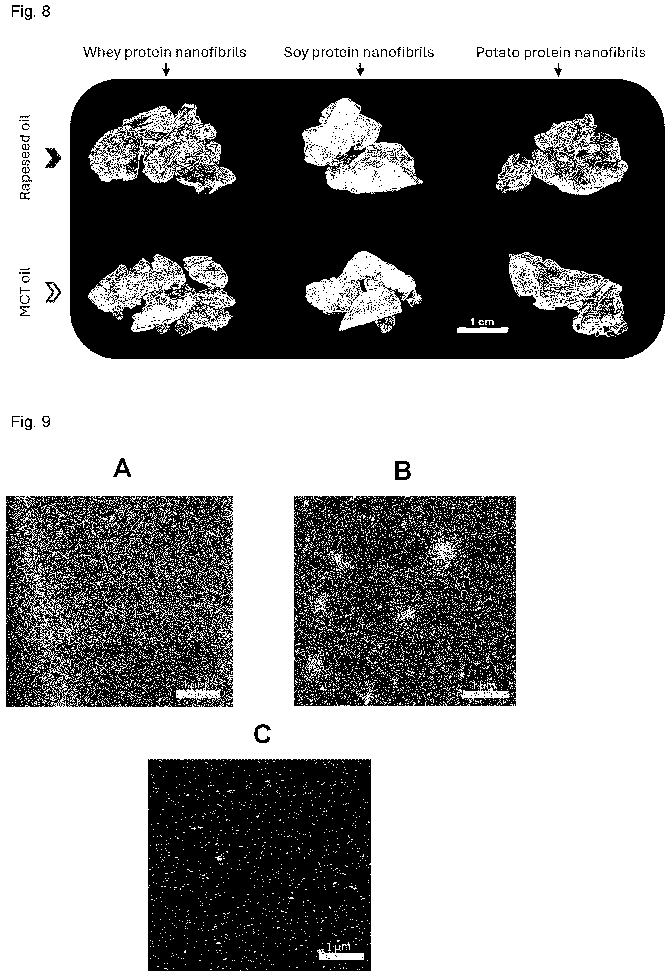

The structural stability of the oleogel is promoted by the strength and thickness of the interface formed by the oleogelator. Thus, during the storage of the oleogels, the edible material based on monomeric proteins showed a loose structure and high oil exudation (Figs. 9 and 10). In contrast, oleogels, structured by protein nanofibrils, retained a stable shape with the encapsulated oil droplets. Introducing protein nanofibrils as oleogelators may promote less surface deformability due to a tightly packed interfacial film formed by attractive interactions between protein nanofibrils.

### Oscillatory sweeping tests of oleogels, structured by protein nanofibrils

Protein nanofibrils provide the formation of the interfacial network between the tightly packed oil droplets, characterized by a viscoelastic behaviour with high elasticity as the elastic modulus is dominated by the interface formed between the oleogel polyhedral droplets. Dynamic oscillatory data with RSO and MCT oleogels structured by the protein nanofibrils of animal and plant origin are shown in Fig. 6D. Firstly, it was demonstrated that all oleogels exhibited gel-like behaviour during oscillatory shearing and showed G' > G", which can be attributed to the percolating viscoelastic network formed by the protein nanofibrils (Fig. 4B, 5). We observed a little increase in storage modulus with increasing angular frequency. It shows frequency-dependent elastic properties of the oleogels, which was more prominent for the oleogels structured by WAF and PAF that revealed liquid-like shear-thinning behaviour of the Pickering emulsions formed during the ultrasonication (Fig. 3C). However, the storage modulus G' remained higher than the loss modulus G" throughout the entire frequency window available, consistent with the elastic nature of all oleogels.

Furthermore, we have observed a steeper increase of G" compared to G' at an angular frequency higher than 1.5-7 rad/s, which indicates dissipation mechanisms and a behaviour consistent with plastic materials. Such rheological behaviour was observed previously in the lamellar phase of lyotropic liquid crystal formed by a water-monoglyceride mixture. The authors explained this low-frequency event corresponding to the transition from viscous to elastic fluid, whereas the high-frequency event was assigned to plastic dissipative behaviour. Interestingly, more stable SAF-MCT oleogel (Fig. 6E) with the highest interfacial protein concentration ~ 14.4 mg/m3 featured a delayed plastic dissipation. It is worth mentioning that the formation of the strongest oleogel was observed for WAF-MCT, and the elastic modulus trend was similar to previously reported MCT-oleogel, structured by sunflower or bee wax (10 % w/w) by oil heating, reported by Fayaz et al. (Fayaz et al., International Journal of Food Science and Technology, 56, 2021). Overall, SAF-oleogels demonstrated higher standard deviation of both elastic and viscous moduli with subsequent increase of the angular frequency to the samples. We may, therefore, assume the domination of oleogelating properties of the protein nanofibrils over the characteristics of the oil due to the revealed rheological behaviour of the oleogels.

### Oleogelation efficiency of protein nanofibrils

The efficiency of oil encapsulation is primarily associated with the properties of the interfacial film and its barrier capacity to prevent droplet coalescence and oil exudation. Moreover, disruption of the interfacial layer promotes partial coalescence of the oil droplets and affects both encapsulation efficiency and the stability of the oleogel during storage. For instance, the interfacial thickness can hinder the deformation of the oil droplets. Thus, oleogelation with SAF resulted in the lowest loss of RSO (2 %) and MCT (4 %) oil (Fig. 6E). These oleogels also had the highest interfacial protein concentration and showed the formation of the layer of rounded nanodroplets encapsulated between regular polyhedral oil droplets (Figs. 3C and 5B). Using unfibrillized soy proteins under the same oleogelation conditions obstructed the oil binding, resulting in 45 % oil loss (Fig. 11). We may therefore conclude that the cross-linking of soy protein nanofibrils within the interfacial network, along with proper coverage of the oil droplets, provided superior oleogelation. Therefore, protein nanofibrils can deliver high stability to the formed network in the hydrophobic environment, effectively preventing oil leakage. The loss of oil during the oleogelation may be primarily related to the emulsification step (Fig. 1) when the protein nanofibrils form and stabilise the Pickering emulsion. The mutual repulsion of the positively charged whey protein nanofibrils (Table 1) was higher than the plant nanofibrils, as the electrophoretic mobility of the protein nanofibrils followed the order WAF > PAF > SAF. In addition, the higher contour and persistence length of WAF (Fig. 2B) may retard the absorption of the protein nanofibrils at the oil-water interface (Fig. 6A) resulting in the highest oil loss (11-13 %) for the WAF-templated oleogels (Fig. 6E). Whey protein nanofibrils had the highest stiffness with a persistence length of ~ 1.8 µm among the fibrillized proteins. These rigid fibrils might induce incomplete coverage of the oil droplets, leading to higher oil loss during the oleogelation.

Protein nanofibrils present excellent stability due to exceptional strength, mechanical properties, and high Young's modulus. After four months of storage at ambient conditions, we observed that the oleogels structured by the protein nanofibrils maintained a fully stable structure. In contrast, using monomeric proteins induced the syneresis of the gel (Fig. 10). Protein nanofibrils can promote the formation of bridging structures in the interface due to the functional groups exposed on the surface of the fibril. They may further facilitate stronger cross-linking at the interface, thus reinforcing the protein nanofibrils network and improving the interfacial properties of the oleogel. Thus, the continuous network of the protein nanofibrils stabilized the oil droplets more effectively than the native protein controls and prolonged the stability of the oleogel during long-term storage.

### Example 4: Conclusions

The present study introduces protein nanofibrils derived from animal and plant sources as efficient scaffolds for structuring liquid oils through an emulsion-templated approach, without the need of using high temperatures or solvents altering the food-grade nature and nutritional profile of the oils. Following this approach we have produced oleogels fully based on plant ingredients, and with very low protein content (1.7-2.4 %) and water activity (0.43-0.49). The internal phase emulsion yield was found to determine oil encapsulation efficiency and prevent oil loss during oleogelation. The results indicate that the morphology of protein nanofibrils, especially their persistence length, directly affects oleogelation. The Pickering emulsions, stabilised by the protein nanofibrils, were finely dispersed at an oil volume fraction of 50 %, encapsulating oil into droplets of about 2 µm size. Utilising highly flexible plant-based protein nanofibrils led to the formation of rounded oil droplets and a substantial reduction in oil loss during oleogelation. Conversely, using rigid whey protein nanofibrils, which were found to form more straight-edged oil polyhedrons, resulted in oleogels with a 3.5-fold higher storage modulus (G') than those formed using flexible potato protein nanofibrils. The protein network formed by the protein nanofibrils featured a thickness of the protein layer of 11-19 nm, entrapping the oil polyhedrons and ensuring excellent rheological properties and stability of the oleogels even during long-time storage. This strategy further broadens the scope of food protein nanofibrils as a functional templating platform for food, biomedical, and pharmaceutical applications.

### Example 5: Materials and methods

### Materials

Whey protein isolate (WPI, 98% protein content (N×6.38), w/w) was kindly supplied by Fonterra (New Zealand). Soy protein isolate (SPI, 80% protein content (N×5.71), w/w) and rapeseed oil (RSO) were kindly provided by Pacovis AG (Switzerland). Potato protein isolate (PPI, Solanic 200, 91% protein content (N×6.25), w/w) produced by Royal Avebe U.A. (Netherlands) was donated by BAVA Baumann & Cie (Switzerland). Medium-chain-triglyceride oil (MCT) was purchased from Shaanxi Haibo Biotechnology Co., Ltd. (China). 1-aniline-8-naphthalenesulfonate (ANS) and rhodamine B was purchased from Sigma-Aldrich/Merck AG (Switzerland). All solutions were prepared using Milli-Q water (18.2 MΩ cm⁻¹; Millipore, USA).

### Oleogelation

The oleogelation protocol is depicted in **Fig. 1****.** Protein isolate (3 or 4 % w/w for PPI and WPI/SPI, respectively) was dissolved in MilliQ water (pH 2) with constant stirring at room temperature. Then, the protein solution was fibrillized at 85 or 90°C for PPI and WPI/SPI, respectively, with constant stirring (450 rpm) during 5 (WPI), 15 (SPI) or 24 (PPI) h. The different protein concentrations used in this study, as well as the fibrillization conditions, were optimized through preliminary studies and tuned to induce the highest oleogelation propensity of the formed protein nanofibrils. After quenching on ice, the fibrillized solution was emulsified at the oil volume fraction (φ) of 0.5 with an ultrasonicator UP100H (Hielscher Ultrasonic, Germany) equipped with a MS7 sonotrode at amplitude 80, cycle 0.8 for 5 min. Then, the Pickering emulsion, stabilised by the protein nanofibrils, was centrifuged at 24000 g, 21°C for 20 min using a centrifuge MPW 380R (MPW Med. Instruments, Poland). The resulting compressed emulsion (upper layer) or high internal phase emulsion (HIPE) was dried at 37°C for 48 h, leading to the formation of the oleogel structured by the protein nanofibrils.

### Atomic force microscopy (AFM) and statistical analysis of protein nanofibrils

An aliquot of protein or protein nanofibrils solutions was diluted by a factor 100 by Milli-Q water (pH 2). A 20 µL aliquot of each sample was deposited on the freshly cleaved mica for 2 min. Then, the mica surface was gently rinsed with Milli-Q water (pH 2) and dried using a nitrogen gas flow.

AFM measurements were conducted using a Bruker MultiMode 8 scanning probe microscope (Bruker, Billerica, MA, U.S.A.), operating in tapping mode under ambient conditions with a commercial silicon nitride cantilever (Bruker, Billerica, MA, U.S.A.) at a vibration frequency of 150 kHz. AFM images were flattened using Nanoscope 8.1 software (Bruker, Billerica, MA, U.S.A.). To characterise the morphology of the protein nanofibrils and determine their average height, contour length and persistence length, the statistical analysis of AFM images was performed by using the open-source software FiberApp (Usov & Mezzenga, Macromolecules, 48, 2015).

### Electrophoretic mobility of protein nanofibrils

Electrophoretic mobility of the protein nanofibrils was determined using a particle electrophoresis instrument (Nano ZS, Malvern Instruments, Malvern, UK) at a constant temperature of 25°C. All experiments were performed in triplicate.

### Surface hydrophobicity (H₀) of protein nanofibrils

The surface hydrophobicity of protein nanofibrils was determined using 1-aniline-8-naphthalenesulfonate (ANS) (Li et al., Food Hydrocolloids, 111, 2021) . The samples were diluted with MilliQ water (pH 2) to concentrations of 0.004-0.03 mg/mL. 10 µL of ANS solution (4 mM) was added to the diluted samples (200 µL). The fluorescence intensity was measured at wavelengths of 390 nm (excitation) and 484 nm (emission) in an Infinite M200 Pro microplate reader (Tecan Group AG, Männedorf, Switzerland). The surface hydrophobicity was defined as the initial slope of fluorescence intensity versus protein concentration per mg of protein in the protein nanofibril solution.

### Optical microscopy of emulsions

Optical microscopy (Zeiss Axio Imager Z2) with an attached camera (AxioCam MRc) and 20× (Plan-Neofluar) objective was used to record the oil droplets in the emulsions. A drop of the freshly prepared emulsion was put on a glass slide and covered with a cover slide for the imaging. All analyses were performed using Zen software.

### Particle size distribution of oil droplets in emulsions

The droplet-size distribution of the prepared emulsions was analysed directly after the emulsification using a Laser Diffraction Particle Size Analyzer LS 13 320 (Beckmann Coulter GmbH, Krefeld, Germany). To avoid multiple scattering, 1 mL aliquots of the prepared emulsion were diluted in 9 mL Milli-Q water. Droplet size was measured as distribution and as an average droplet size reported by the volume-surface average diameter (D_{3,2}) or the Sauter-average diameter. All measurements were performed in triplicate.

### Confocal laser microscopy and droplet size analysis of oleogels

The microstructure of the oleogels structured by the protein nanofibrils was characterised by laser scanning confocal microscopy (CLSM) using the microscope Zeiss LSM 880 (Carl Zeiss GmbH, Jena, Germany). Before the oleogelation, the protein nanofibrils were stained by 0.002 % Rhodamine B. CLSM was conducted with excitation by Laser DPSS 561-10 at 561 nm using a detector GaAsF 565-598 nm. The microstructure of the oleogels was observed with the objective Plan-Apochromat 63x/1.40 Oil DIC M27. All analyses were performed using Zen and ImageJ software.

### Scanning electron cryomicroscopy of oleogels

Small pieces of the oleogel were carefully transferred into a 6 mm aluminium planchette and with a second planchette a sandwich was formed and frozen in a high-pressure freezer HPM 100 (Bal-Tec/Leica, Austria). Vitrified specimens were then fractured in a freeze-fracturing system BAF 060 (Bal-Tec/Leica, Austria). Unidirectional tungsten deposition at an elevation angle of 45° to a thickness of 3 nm was followed by 3 nm at 90°. The sample was transferred to the SEM with a cold air-lock shuttle VCT010 (Bal-Tec/Leica, Austria). CryoSEM was performed in a field emission SEM (Merlin, Zeiss, Germany) on a VCT cryostage (Bal-Tec/Leica, Austria). Image acquisition was done with Inlens-SE- and Everhart-Thornley SE-signals at an acceleration voltage of 2 kV. The contrast and brightness of the pictures were adjusted if necessary.

### Oleogelating capacity of protein nanofibrils

The method for measuring adsorbed protein percentage was modified following Liang & Tang (Liang & Tang, Food Hydrocolloids, 33, 2013) and Puppo et al. (Puppo et al., Food *Hydrocolloids,* 25, 2011). After centrifugation of the Pickering emulsion, stabilised by the protein nanofibrils (see section *Oleogelation*)*,* the aqueous residue was collected. Then, the protein content in the initial protein nanofibrils solution (PC₀) and the aqueous residue (PC_{I}) was determined by measuring the total nitrogen content (see section *Protein content*)*.* The absorbed protein nanofibrils AAF (%) during the oleogelation were calculated using Eq. (1). $AAF \left(%\right) = \frac{{PC}_{0} - {PC}_{l}}{{PC}_{0}} \times 100$

Interfacial protein concentration Γ (mg/m²) was calculated according (Liang & Tang, LWT - Food Science and Technology, 58, 2014) and based on the protein content in the initial protein nanofibrils solution PC₀ (mg/ml) and the aqueous residue PC_{I} (mg/ml), the volume-surface average diameter D_{3,2} (µm) of the emulsion droplets (see section *Particle size distribution of oil droplets in emulsions),* and the oil volume fraction (φ) in the emulsion (0.5) by Eq. (2). $Γ \left(mg/{m}^{2}\right) = \frac{\left({PC}_{0}-{PC}_{l}\right) \times {D}_{3 , 2}}{6 φ}$

To calculate the HIPE yield (HY, %), the mass of oil used for the oleogelation (O, g) and the mass of the HIPE obtained after the centrifugation (H, g) were used according to Eq. (3). $HY \left(%\right) = \frac{H}{O} \times 100$

All measurements were carried out in triplicates.

### Protein content

The protein content in the isolates, the initial protein nanofibrils solutions, the aqueous residues after the oleogelation, and the oleogels structured by the protein nanofibrils were determined by quantifying the total nitrogen content using a total organic carbon analyser coupled with a total nitrogen measurement unit (TOC-L with TN, Shimadzu, Kyoto, Japan). To calculate the protein content, the total nitrogen content was converted using the nitrogen-to-protein conversion factor of 6.38, 5.71, and 6.25 for whey, soy and potato protein isolates, respectively. Measurements were performed in triplicate.

### Moisture content and water activity (A_{w}) of oil and oleogels

Moisture content was determined by a halogen moisture analyser (Mettler Toledo HE53, Mettler-Toledo AG, China) with 1 g of a sample heated at 120 °C for 20 min. Measurements were conducted in triplicate. The water activity of the oleogels was analysed using the water activity measuring device LabMaster-aw neo (Novasina, Lachen, Switzerland) at averaged mode and 25 °C.

### Colour of oleogels

The colour of protein nanofibril-templated oleogels, assessed by lightness (L*), redness (a*), and yellowness (b*), was measured with a CM-5 spectrophotometer (Konica Minolta Sensing, Inc., Osaka, Japan) and performed in triplicate.

### Rheological characterization

The viscosity of the Pickering emulsions stabilised by the protein nanofibrils was determined by a rotational rheometer Anton Paar MCR 501 (Anton Paar, Graz, Austria) equipped with the concentric cylinder geometry CC17 and the software RheoCompass at 20°C. Viscosity was measured at shear rates ranging from 0.01 to 100 s⁻¹.

The rheological properties of the oleogels were measured with a rotational rheometer Anton Paar MCR 501 (Anton Paar, Graz, Austria). The oscillatory sweeping tests were carried out using a measuring system PP25/S, parallel plate with sandblasted 25 mm diameter at 20 °C. The gap between the two measuring plates was adjusted according to the height of the preprepared disk-like shaped oleogel samples, to ensure that the upper plate was in contact with the surface of the oleogels themselves, but without inducing large compression forces on them (which could have altered their micro- and mesoscopic features). The frequency sweep was performed within the linear viscoelasticity region, increasing frequency from 0.1 to 100 rad/s to obtain storage (G') and loss (G") moduli.

### Oil encapsulated during oleogelation and oil loss

The oil encapsulation efficiency of the oleogelation by the protein nanofibrils OEE (%) was calculated as a ratio between the mass of the oleogel (OG_{d}, g dw) and the initial mass of oil (O_{d}, g dw) used for the oleogelation, following Eq. (4): $OEE \left(%\right) = \frac{{OG}_{d}}{{O}_{d}} \times 100$

The oil loss during the oleogelation OL (%) was determined by using the mass of oil introduced for oleogelation O (g), the mass of the resulting oleogel OG (g), and protein content PC (g) in the oleogel according to Eq. (5). $OL \left(%\right) = \frac{O - OG - P}{O} \times 100$

### Cited references:

Goldschmidt, L., Teng, P. K., Riek, R., & Eisenberg, D. (2010). Proceedings of the National Academy of Sciences, 107(8), 3487-3492.
Taha, A., Ahmed, E., Ismaiel, A., Ashokkumar, M., Xu, X., Pan, S., & Hu, H. (2020). Trends in Food Science & Technology Ultrasonic emulsification: An overview on the preparation of different emulsifiers-stabilized emulsions. Trends in Food Science & Technology, 105, 363-377.
McClements, D. J. (2015). Emulsion Formation. In Food Emulsions.
Scholten, E. (2018). Protein Oleogels: Network Formation of Proteins in Hydrophobic Conditions. In Edible Oleogels (pp. 285-305). Elsevier Inc.
Berton-Carabin, C. C., Sagis, L., & Schroën, K. (2018). Formation, Structure, and Functionality of Interfacial Layers in Food Emulsions. Annual Review of Food Science and Technology, 9, 551-587.
Romoscanu, A. I., & Mezzenga, R. (2006). Emulsion-templated fully reversible protein-in-oil gels. Langmuir, 22(18), 7812-7818.
Fayaz, G., Polenghi, O., Giardina, A., Cerne, V., & Calligaris, S. (2021). Structural and rheological properties of medium-chain triacylglyceride oleogels. International Journal of Food Science and Technology, 56, 1040-1047.
Usov, I., & Mezzenga, R. (2015). FiberApp: An open-source software for tracking and analyzing polymers, filaments, biomacromolecules, and fibrous objects. Macromolecules, 48(5), 1269-1280.
Li, T., Wang, L., Zhang, X., Geng, H., Xue, W., & Chen, Z. (2021). Assembly behavior, structural characterization and rheological properties of legume proteins based amyloid fibrils. Food Hydrocolloids, 111, 106396.
Liang, H.-N., & Tang, C.-H. (2013). PH-dependent emulsifying properties of pea [Pisum sativum (L.)] proteins. Food Hydrocolloids, 33(2), 309-319.
Peng, J., Simon, J. R., Venema, P., & Van Der Linden, E. (2016). Protein Fibrils Induce Emulsion Stabilization. Langmuir, 32(9), 2164-2174.
Puppo, M. C., Beaumal, V., Speroni, F., Lamballerie, M. De, Añón, M. C., & Anton, M. (2011). β-conglycinin and glycinin soybean protein emulsions treated by combined temperature - high-pressure treatment. Food Hydrocolloids, 25(3), 389-397.
Liang, H. N., & Tang, C. he. (2014). Pea protein exhibits a novel Pickering stabilization for oil-in-water emulsions at pH 3.0. LWT - Food Science and Technology Journal, 58(2), 463-469.
Xu, D., Zhou, J., Soon, W. L., Kutzli, I., Molière, A., Diedrich, S., Radiom, M., Handschin, S., Li, B., Li, L., Sturla, S. J., Ewald, C. Y., & Mezzenga, R. (2023). Food amyloid fibrils are safe nutrition ingredients based on in-vitro and in-vivo assessment. Nature Communications, 14(1).
Xu, Y., Ma, C. min, Yang, Y., Bian, X., Liu, X. fei, Wang, Y., & Zhang, N. (2023). Food-derived protein amyloid-like fibrils: Fibrillation mechanism, structure, and recent advances for the stabilization of emulsions. Food Hydrocolloids, 145(1), 109146.

All scientific publications and patent documents cited in the present specification are incorporated by reference herein.

**Table 1**

| Protein nanofibrils solution | Electrophoretic mobility, µmcm/Vs | Hydrophobicity (H₀/mg of protein), 10⁵ |
|---|---|---|
| Whey protein nanofibrils | 2.85±0.18 | 29.5±1.3 |
| Soy protein nanofibrils | 2.08±0.11 | 28.7±1.1 |
| Potato protein nanofibrils | 2.46±0.05 | 21.0±1.3 |

**Table 2**

| Oil | Oleogelator | | |
|---|---|---|---|
| | Whey protein nanofibrils | Soy protein nanofibrils | Potato protein nanofibrils |
| Rapeseed oil | 1.85±0.85 | 2.38±1.10 | 2.30±1.17 |
| | (0.63... 3.96) | (0.87... 6.85) | (0.52... 5.58) |
| MCT oil | 1.59±0.52 | 2.25±0.80 | 1.11±0.49 |
| | (0.48... 2.96) | (0.50... 5.32) | (0.42... 2.72) |

## Claims

1. An oleogel comprising a plurality of protein nanofibrils, and ≥95% of a lipophilic phase (w/w), and comprising ≤3% (w/w) emulsifier, particularly comprising no emulsifier.

2. A method for production of an oleogel, the method comprising the steps:
a. providing a protein nanofibril-comprising composition;
b. in an emulsifying step, exposing the protein nanofibril-comprising composition to
i. high intensity ultrasound; and/or
ii. high pressure; and/or
iii. microfluidization;
in presence of an oil, yielding a Pickering emulsion;
c. in a water-removing step, exposing the Pickering emulsion to
i. centrifugation; and/or
ii. filtration, and/or
iii. evaporation, and/or
iv. freeze-drying;
yielding an oleogel.

3. The method according to claim 2, wherein the protein nanofibril-comprising composition is produced by a method comprising the steps:
a. exposing a protein to a pH below its isoelectric point, yielding an acidic protein solution;
b. exposing the acidic protein solution to a temperature above the protein denaturation temperature, yielding a protein nanofibril-comprising composition.

4. An oleogel obtained by the method of any one of claims 2 to 3.

5. The oleogel according to any one of claims 1 or 4, wherein the protein nanofibrils have an aspect ratio of ≤ 10 nm in diameter and ≥ 100 nm in length.

6. The oleogel according to any one of claims 1 or 4 to 5, wherein the protein nanofibrils have a highly positively charged surface, particularly protein nanofibrils exhibit an electrophoretic mobility of 1-2 µm·cm/V·s at pH 4.

7. The oleogel according to any one of claims 1 or 4 to 6, wherein the protein nanofibrils originate from an amyloidogenic plant- or animal-based protein.

8. The oleogel according to any one of claims 1 or 4 to 7, wherein the lipophilic phase comprises 0 to 30% (w/w) of one or more components selected from the group of salt, sugar, terpenoid, fatty acid, amino acid, vitamin, and gelling agent.

9. The oleogel according to any one of claims 1 or 4 to 8, wherein a concentration of said protein nanofibrils is ≤3% (w/w), particularly ≤2% (w/w).

10. The oleogel according to any one of claims 1 or 4 to 9, wherein said oleogel does not comprise an organic solvent, particularly said oleogel does not comprise acetone or THF.

11. The oleogel according to any one of claims 1 or 4 to 10, wherein said oleogel does not comprise nickel.

12. The oleogel according to any one of claims 1 or 4 to 11, wherein said oleogel comprises ≤ 0.8% (w/w) water, particularly ≤ 0.6% (w/w) water.

13. The oleogel according to any one of claims 1 or 4 to 12, wherein said oleogel has a storage modulus ≥ 140 kPa at 1 rad/s.

14. The oleogel according to any one of claims 1 or 4 to 13, wherein said oleogel has a Young's modulus ≥ 400 kPa G' at 1 rad/s.

15. The oleogel according to any one of claims 1 or 4 to 14, wherein said protein nanofibrils form a protein layer of ≥10 nm thickness.
